# EUROPEAN PATENT SPECIFICATION

(11) **EP 0 861 183 B1**
(45) Date of publication and mention of the grant of the patent: **01.12.1999**
(21) Application number: 95937953.8
(22) Date of filing: 20.11.1995
(51) Int. Cl.: B62D 5/00

(54) **POSITION SERVO SYSTEM**
POSITIONS-SERVO-SYSTEM
SERVO-COMMANDE DE POSITION

(43) Date of publication of application: 02.09.1998
(60) Divisional application: 99107935.1
(73) Proprietor: TOROTRAK (DEVELOPMENT) LIMITED, Leyland, Lancashire PR5 3QW (GB)
(72) Inventor: GREENWOOD, Christopher, John, Lancashire PR5 3WS (GB)
(74) Representative: Bingham, Ian Mark
(86) International application number: GB9502713
(87) International publication number: WO9718982

(56) References cited:
- EP-A- 0 084 724
- PATENT ABSTRACTS OF JAPAN vol. 013, no. 118 (M-806), 23 March 1989 & JP,A,63 291770 (FUJI HEAVY IND LTD), 29 November 1988, cited in the application

## Description

This invention relates to position servo systems, in which the detection of an error between the desired relative positions of actuating (i.e. driving) and driven members causes power to be applied to tend to reduce that error. The invention applies particularly but not exclusively to power-assisted steering systems, of the known general kind in which a steering mechanism - for instance of rack or worm type - is driven by a gear or pinion, typically carried at one end of a shaft, the other end of which carries a steering wheel or other control member. Means are provided to sense torsional deflection in the shaft. When that deflection exceeds a predetermined value, indicating that a substantial steering effort is being applied, an auxiliary source of power is activated and applied to the worm or gear to augment the steering wheel torque, and so reduce the deflection in the shaft.

It has been proposed in Japanese Patent Publication 63291770A to incorporate a continuously-variable-ratio transmission ("CVT") of the "variable-ratio-epicyclic" type in a power-assisted steering system. The customary components of such a CVT are an epicyclic gear set and a speed-varying component or "variator", the latter comprising an input member, and intermediate reaction member and an output member. By the "variable-ratio-epicyclic" type of CVT we mean the type in which the axes of rotation of all three of the elements of the variator are concentric, so that the total configuration of the variator bears some resemblance to a conventional geared epicyclic or planetary gear set. The present invention is to be distinguished from the embodiment of JP-A-63291770 principally in that in the system described in that prior publication, the CVT does not generate and transmit any power to assist the steering effort provided by the operator. Instead, the function of the CVT appears to be to vary the manual steering ratio, between the steering wheel and the steering rack to which it is connected, so that quite separate means to generate power assistance receive relatively strong signals at low vehicle speeds and weak ones at high speeds.

The present invention is also of course to be distinguished from the many prior automotive CVT's of concentric arrangement (of which US-A-4922788 shows an example), by the fact that in those CVT's the sole source of motive input has been the prime mover of the automobile. In the position servo systems to which the present invention relates there must be two separate sources of such inputs. For example, in a power steering system a first and manual input is applied via the steering wheel and the CVT must be driven by a second source of motive power in order to contribute the power-assistance that is required.

The invention will now be described by way of example with reference to the accompanying figures of simplified and partly-schematic drawings in which:
Figure 1 is a schematic view of a power assisted steering system;
Figure 2 includes a sectional view taken in a plane including the shaft 3;
Figure 3 illustrates linkages and movements associated with one of the rollers of the variator, and
Figure 4 shows an alternative to the arrangement shown in Figure 3.

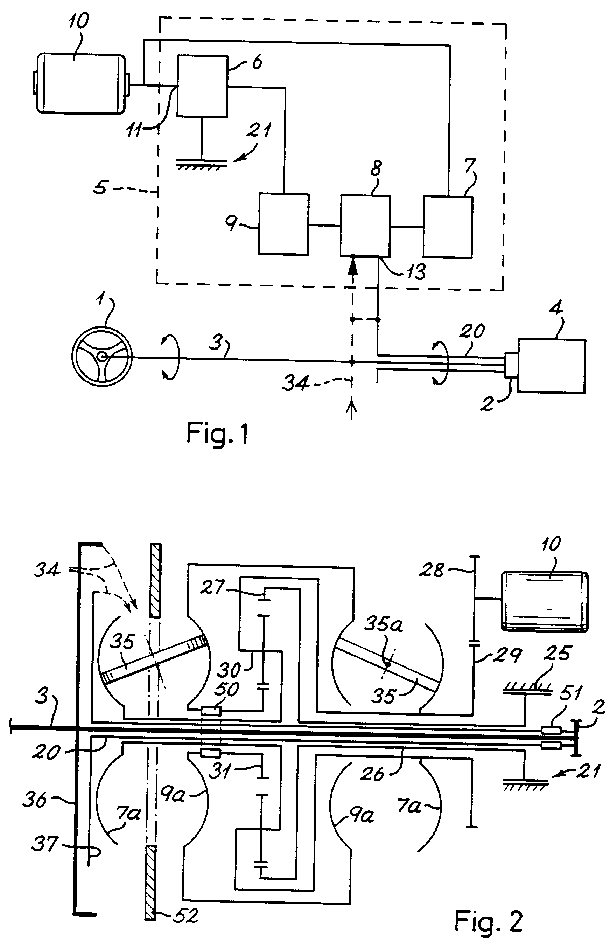

Figure 1 shows that the output of a constant speed electric motor 10 is connected both to the "input" member 7 of a variator of the variable-ratio epicyclic type and also (at 11) to one component of a typical three-part epicyclic gear set 6. The other two components of the gear set 6 are connected to the "output" member 9 of the variator and to a torque-limiting device 21 respectively. The third and intermediate member 8 of the variator produces an output 13 which constitutes one input to a pinion 2 driving a steering rack 4, the other input being from a steering wheel 1 by way of a shaft 3. The parts which make up the CVT are shown within the broken line 5 and comprise the gear set 6 and variator (7, 8 and 9), and those parts are mounted to rotate as a single assembly with a tube 20, which is coaxial with shaft 3 and by way of which they are connected to pinion 2. Shaft 3 and tube 20 thus constitute a pair of concentric rotary actuating inputs to the pinion 2. Because the torque-limiting device 21 does not itself need to rotate, it can for instance be in the simple and reliable form of a stationary brake.

Figure 2 adds some detail to a version of Figure 1 in which the variator is of the toroidal-race rolling-traction type, and shows in particular how the CVT is arranged to rotate concentrically around the steering shaft 3. A stationary reaction member 25 engages, by way of the brake-type torque-limiting device 21, with a sleeve 26 carrying the annulus gear 27 of gear set 6. Motor 10 engages, by way of gears 28 and 29, both with the end discs, that is to say the input disc 7, of a toroidal-race variator and also with the planet carrier 30 of set 6. The output discs 9 of the variator are mounted in common with each other and also with the sun gear 31 of the epicyclic gear set. It should be noted both that double planets are carried by the carrier 30, in order to reverse the directions of rotation of discs 7, 9 as is necessary in a toroidal-race variator, and that gear ratios are advantageously chosen to give equal and opposite speeds of rotation to the discs. The "intermediate member" 8 of the variator in this embodiment comprises two sets of traction-transmitting rollers and their associated carrier assemblies, one such set being disposed between one pair of the discs 7, 9 and the second set between the other pair. One such roller of each set is shown in outline at 35. Typically there will be three such rollers in each set, disposed at equal angular intervals about the axis of shaft 3.

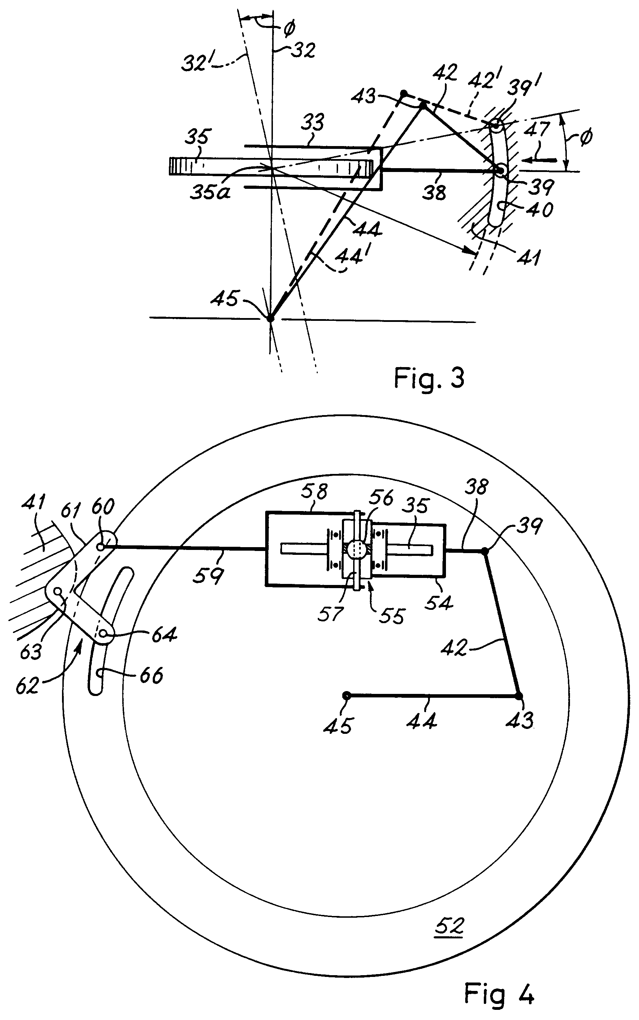

Reference 34, in Figure 2, indicates how control of the system must link the steering shaft 3, the variator intermediate member 8, and the tubular connection 20 to pinion 2. Figure 2 shows flanges 36 and 37, carried by shaft 3 and tube 20 respectively, and Figure 3 illustrates the principles behind one means by which flange 36 could be connected with the rollers 35, so as to cause the rollers to change ratio when shaft 3 exceeds a given torsional deflection (i.e. when the angular positions of shaft 3 and sleeve 20 differ by more than a given amount), and how the torque reaction experienced by the rollers can then be applied to the pinion 2 by way of tube 20, thus providing a power-steering effect by augmenting the force exerted by the driver on the steering wheel 1, so tending to reduce the difference to zero.

Three further features of Figure 2 should also be noted. First a centrifugal clutch or equivalent safety device 50, located between the sun gear 31 and the output discs 9 and operable to ensure that the sun disconnects from the discs, and the power-steering linkage is therefore disabled, should the sun gear 30 cease to rotate because, for example, the motor 10 has failed. If this happens, the operator must steer manually by way of the wheel 1, and the disabled power-steering mechanism must not interfere with his doing so. Secondly, a suitable uni-directional lost-motion connection 51 located between the pinion 2 and the flange 37/reaction plate 41. This is to ensure that the power-steering mechanism works to augment the steering effort when the operator turns the wheel 1 with the intention of moving the rack 4, but allows the pinion 2 to turn the wheel 1 when it is appropriate for the steering effect to be in the reverse direction. This reverse effect occurs, for instance, due to road wheel camber when the vehicle is coming out of the bend, when without the one-way effect of the device 51 the power steering mechanism might tend to resist the restoration of the wheel 1 to the straight-ahead position. Thus item 51 effectively operates so that if the driver lets go the wheel 1, the position taken up by that wheel is determined by the road wheels. The third further feature to be noted is a ring 52 located adjacent one of the sets of rollers 35 and nominally coaxial with shaft 3, but with a central aperture 53 large enough to enable the ring to move slightly off centre without fouling the rollers. The function of this ring will be explained in connection with the embodiment of Figure 4.

Figure 3 shows one of the rollers 35, mounted to rotate about an axis 32 in a carriage 33 connected to a rod 38 carrying a ball end 39 mounted to slide in an arcuate slot 40 formed in a reaction plate 41. As is customary and well-understood in the art, the centre 35a of roller 35 is constrained to lie on the fixed "centre circle" of the torus to which the discs 7,9 conform. The arc of slot 40 has the same centre 35a. Ball end 39 is pivoted to a link 42, which is in turn pivoted at 43 to one end of a link 44, the other end of which is pivoted to flange 36 and should be visualised as rotating in a plane at right angles to the paper in Figure 2, but parallel to the paper in Figure 3 and as if point 45 coincided with the axis of shaft 3. Reaction plate 41 is attached to and lies parallel to the face of flange 37, so that plate and flange move together. With roller 35 in the position in which it is shown in Figure 3, axis 32 will coincide with the common axis of shaft 3 and tube 20. This represents the equilibrium position of the system, in which there is negligible torsional deflection in shaft 3, and in which the ratios of the CVT are chosen so that it is in the so-called "geared neutral" condition, in which the ball ends 39 lie in their mid-position within the slot 40. There is thus no torque load on the rollers 35, and therefore ball ends 39 are exerting no thrust on reaction plate 41 in the direction indicated by the arrow 47. Motor 10 is therefore exerting no torque on pinion 2 by way of flange 37 and tube 20. If however shaft 3 undergoes a torsional deflection, resulting in a corresponding angular error between shaft 3 and tube 20, this displaces links 42, 44 to the positions shown at 42' and 44' respectively, and tilts roller 35 so that it is now aligned with the ball at another position within the slot 40. In Figure 3 this is shown at 39', one limit of its range of positions within the slot. The displaced roller axis 32' now no longer intersects the axis of shaft 3 which is, of course, also the variator axis. Roller 35 therefore experiences a torque reaction, which produces a reaction force (resolvable in the direction of arrow 47) on plate 41 (i.e. on flange 37), and thus via tube 20 a torque on pinion 2 which supplements the torque being exerted on it by way of wheel 1 and shaft 3. This supplementary torque then tends to decrease to zero as the angle φ does likewise, and the ball end 39 returns to its mid-position within the slot.

In designing the embodiment illustrated in Figure 4 it was appreciated that roller reaction forces - see reference 47 in Figure 3 - are large, and that there are potential advantages, such as reduced stiction and improved driver feel, in isolating the steering input forces (applied to flange 36 in Figure 2 from the roller reaction forces which constitute the output of the power steering system and are applied to flange 37. Another feature of the resulting design is a simple mechanism serving to equalise the output forces exerted by the three rollers (35) in each set as described for Figure 2. Such equalisation occurs naturally in a modern torque-controlled automotive CVT (as described for instance in Patent Specification EP-B-0444086) where the rollers are positioned hydraulically. However, a lack of exact equalisation could be expected, and could create problems, in the simpler CVT which would be economical for a power-steering or other auxiliary drive, and in which the orientation of each roller is controlled by a direct mechanical connection between that roller and the steering wheel 1.

The first difference to note between the embodiments of Figures 3 and 4 is that in the latter Figure the linkage (38, 39, 42, 43, 44) connecting the roller carriage 33 to flange 36 (and so to shaft 3 and steering wheel 1) is now confined to the "input" side of the system and makes no contact with reaction plate 41, and that slot 40 is no longer present.

The other main difference, relating now to the "output" side of the system, is that the roller carriage is essentially in two parts. The first part 54 is similar to item 33 of Figure 3, but carries at its centre a "rose" or other articulating joint 55, the central ball 56 of which carries a rod 57 connected to a frame 58 which constitutes the second part of the carriage. A rod 59 projects from frame 58 in a manner similar to that in which rod 38 projects from frame 33. Rod 59 is pivoted at 60 to one arm 61 of a bell crank 62 the vertex of which is pivotally mounted at 63 on the reaction plate 41. The other arm of bell crank 62 carries a pin 64 which slides in a slot 66 formed in the "floating" equalisation plate 52 already described with relation to Figure 2. As has already been pointed out, the single roller 35 shown in Figures 3 and 4 will be one of a set of three transmitting traction across a toroidal cavity between an input toroidal disc 7 and a corresponding output disc 9, and the three rollers will be located at equal angular intervals around the axis of the shaft 3. Nominally, therefore, the pins 64 will also lie at equal angular intervals on an imaginary circle coaxial with the rod 3, and the plate 52 will itself also be coaxial. Should the thrusts exerted (by way of carriage parts 58 and rods 59) of the three rollers not be quite equal, however, the effect of the inequality will be to move the pins 64 and thus move the plate 52 slightly off-axis until it reaches an equilibrium position, in which the relative angular setting of the three bell cranks will be such that equal turning forces will be applied to the reaction plate 41 by each of the bell cranks 62, at its respective pivotal connection 63. By forming the arcs of the slots 66 nominally concentric with shaft 3 (i.e. 45), the forces which the pins 64 exert upon the plate 52 to move it are substantially radial only, and without any circumferential component that would tend to rotate the plate.

The following potential advantages of the embodiments of the invention shown in all the Figures of drawings should be particularly noted. Firstly that because the entire CVT rotates in common with the members from which it receives its input and to which it delivers its output, there are no problems associated with the fact that while the shaft 3 can rotate through over three revolutions, the power steering effect should come into operation when there is only a small angular error - say 2° - between shaft 3 and tube 20. Secondly, that the variator naturally rests with the rollers 35 at a 1:1 ratio when stationary, thereby avoiding any tendency to steer.

While the invention has been illustrated in the drawings only as applied to a power-assisted steering system, it will be apparent to the man skilled in the art that it is capable of general application to position servos in which power assistance may be useful to ensure that the hand-powered or other lightly-powered movements of a rotary input member are followed by a concentric but more massive rotary output member. Such applications include a powered winch, in which the drum is power-driven to follow a manually-operated handle, or a rotary crane or machining head in which high power drives cause the cab and turret respectively to follow the movements of rotary controls that are themselves operated either directly by hand, or with only modest power assistance.

## Claims

1. A position servo system comprising
- a driven mechanism (4)
- a first rotary actuating member (1, 3) by which operative control is normally applied to the driven mechanism (4),
- a continuously-variable-ratio transmission of the toroidal- race rolling-traction type being disposed coaxially with the first rotary actuating member,
- a first mechanical connection (34) between the roller assembly of the continuously-variable-ratio transmission and the first rotary actuating member (1 ,3), and
- a second connection (20,37,51,2) between the rollers of the continuously-variable-ratio transmission and the driven mechanism (4), and
- the continuously-variable-ratio transmission has a rotary input member (28, 29, 30) separate from the first rotary actuating member (1,2) and connected to a prime mover (10) to be driven thereby, in which
- an error between the positions of the driven mechanism (4) and the first actuating member (1,2), indicative of the application of a substantial driving effort, results in a power output from the continuously-variable-ratio transmission, tending to apply torque to the driven mechanism so as to diminish the error.

2. A system according to Claim 1 in which the driven mechanism is a steering mechanism and the system comprises a position servo system of the power-assisted steering type.

3. A system according to Claim 1 or Claim 2 in which the output of the CVT is applied to the driven mechanism by way of a second rotary actuating member (20) coaxial with the first.

4. A system according to Claim 3 in which the first and second actuating members comprise a central shaft and a surrounding tube respectively.

5. A system according to any preceding claim in which the driven mechanism is in the form of a rack, worm or the like, and the first and second actuating members both drive a co-operating pinion, gear or the like.

6. A system according to any preceding claim in which the variator - that is to say the ratio-varying component - of the CVT is of the toroidal-race rolling-traction type.

7. A system according to Claim 6 in which the CVT also includes an epicyclic gear set (6).

8. A system according to Claim 7 in which the epicyclic gear set includes double-planets to reverse the direction of rotation between the sun and planet carrier gears.

9. A system according to Claim 6, Claim 7 or Claim 8 in which the first connection between the first actuating member and the toroidal-race CVT is with the roller carriages (33), so as to tend to alter the roller orientation and thus the transmitted ratio when the driven mechanism is activated.

10. A system according to Claim 9 in which the second connection between the CVT and the driven mechanism is by way of a member responsive to the torque reaction experienced by the rollers.

11. A system according to any preceding claim including a device (21) to limit the torque which the CVT can apply to the driven mechanism.

12. A system according to Claim 11 in which the torque-limiting device is in the form of a slipping clutch, brake or the like.

13. A system according to any preceding claim when including the limitations of Claim 7 in which a first component of the epicyclic gear set is connected to one of the disc sides of the toroidal-race CVT, a second component is attached to the other of the disc sides and also to the driving motor, and the third component is attached to a fixed reaction member by way of the torque-limiting device.

14. A system according to Claim 13 in which the first, second and third components of the epicyclic gear set are respectively the sun, the planet carrier and the annulus.

15. A system according to any preceding claim including means (50) to disable the second connection between a component of the CVT and the driven mechanism should the CVT stop rotating.

16. A system according to any preceding claim including a uni-directional device (51) which allows drive to pass through the system in the reverse direction, so that the actuating member responds to the position of the driven mechanism, in the event that the actuating member is not subject to the usual operative control.

17. A system according to any preceding claim when including the limitations of Claim 6 in which a plurality of rollers transmit traction across a common cavity separating toroidal input and output discs, in which the second connection comprises force-transmitting linkages (59 61, 62) connecting the carriage of each such roller to the driven mechanism, and in which those linkages each include a pivotal connection (64) to a movable force-equalising member (52) capable of seeking an equilibrium position in which equal forces are exerted on the driven mechanism by all the rollers.

18. A system according to Claim 17 in which the force-equalising mechanism is disposed nominally concentrically around the first actuating member, but is capable of moving out of concentricity to reach the said equilibrium position.

19. A system according to any of Claims 1 to 16 when including the limitations of Claim 6 in which the first connection to the actuating member and the second connection to the driven mechanism are both made with the roller carriages of the CVT, in which those carriages comprise first and second parts with an articulated joint (55) between them, and in which the first and second connections are made with the first and second part of each carriage respectively.

20. A system according to Claim 1 in which the driven mechanism comprises the drum of a power winch, the cab of a rotary crane, the turret of a rotary machining head or any other hand-powered or other lightly-powered input member followed by a concentric but more massive rotary output member.

21. An automobile or other apparatus including a position servo system as claimed in any preceding claim.

## Patentansprüche

1. Stellungs-Servosystem mit:
- einem angetriebenen Mechanismus (4),
- einem ersten Drehbetätigungsglied (1, 3), durch das der angetriebenen Mechanismus (4) normalerweise eine Betriebsbetätigung erfährt,
- einem Getriebe mit kontinuierlich variablem Verhältnis von der Art eines Toroidbahn-Rollantriebes, das koaxial mit dem ersten Drehbetätigungsglied angeordnet ist,
- einer ersten mechanischen Verbindung (34) zwischen der Rolleneinheit des Getriebes mit kontinuierlich variablem Verhältnis und dem ersten Drehbetätigungsglied (1, 3) und
- einer zweiten Verbindung (20, 37, 51, 2) zwischen den Rollen des Getriebes mit kontinuierlich variablem Verhältnis und dem angetriebenen Mechanismus (4), und
- das Getriebe mit kontinuierlich variablem Verhältnis hat ein Dreheingangsglied (28, 29, 30), das von dem ersten Drehbetätigungsglied (1, 2) getrennt ist und mit einer Antriebsmaschine (10) verbunden ist, um durch diese angetrieben zu werden, wobei
- ein Fehler zwischen den Stellen des angetriebenen Mechanismus (4) und dem ersten Betätigungsglied (1, 2), der Zeichen für das Auftreten einer beträchtlichen Antriebsbeanspruchung ist, zu einer Leistungsausgabe aus dem Getriebe mit kontinuierlich variablem Verhältnis führt, was zum Anlegen eines Drehmoments an den angetriebenen Mechanismus führt, um den Fehler zu reduzieren.

2. System nach Anspruch 1, in dem der angetriebene Mechanismus ein Steuermechanismus ist und das System ein Stellungs-Servosystem von der Art einer Servolenkung aufweist.

3. System nach Anspruch 1 oder 2, in dem die Ausgabeleistung des Getriebes mit kontinuierlich variablem Verhältnis dem angetriebenen Mechanismus mittels eines zweiten, mit dem ersten koaxialen Drehbetätigungsgliedes (20) zugeführt wird.

4. System nach Anspruch 3, in dem das erste und das zweite Betätigungsglied eine zentrale Welle bzw. ein umgebendes Rohr umfassen.

5. System nach einem der vorhergehenden Ansprüche, in dem der angetriebene Mechanismus in der Form einer Zahnstange, einer Schnecke oder ähnlichem ist, und das erste und zweite Betätigungsglied beide ein damit zusammenwirkendes Ritzel, Zahnrad oder ähnliches treiben.

6. System nach einem der vorhergehenden Ansprüche, in dem der Variator - d.h. das das Verhältnis variierende Bauteil - des Getriebes mit kontinuierlich variablem Verhältnis von der Art eines Toroidbahn-Rolltriebes ist.

7. System nach Anspruch 6, in dem das Getriebe mit kontinuierlich variablem Verhältnis auch eine Umlaufgetriebeanordnung (6) umfaßt.

8. System nach Anspruch 7, in dem die Umlaufgetriebeanordnung Doppelplaneten umfaßt, um die Drehrichtung zwischen den Sonnenrädern und den Planetenradträgerrädern umzukehren.

9. System nach Anspruch 6, 7 oder 8, in dem die erste Verbindung zwischen dem ersten Betätigungsglied und dem Toroidbahngetriebe mit kontinuierlich variablem Verhältnis über die Rollenschlitten (33) erfolgt, so daß eine Tendenz besteht, die Rollenorientierung und somit das Übersetzungsverhältnis zu ändern, wenn der angetriebene Mechanismus aktiviert wird.

10. System nach Anspruch 9, in dem die zweite Verbindung zwischen dem Getriebe mit kontinuierlich variablem Verhältnis und dem angetriebenen Mechanismus über ein Glied erfolgt, das auf die durch die Rollen erfahrene Drehmomentreaktion anspricht.

11. System nach einem der vorhergehenden Ansprüche, das eine Vorrichtung (21) zum Begrenzen des Drehmoments umfaßt, das das Getriebe mit kontinuierlich variablem Verhältnis dem angetriebenen Mechanismus zuführen kann.

12. System nach Anspruch 11, in dem die drehmomentbegrenzende Vorrichtung in der Form einer Rutschkupplung, Bremse oder ähnlichem ausgebildet ist.

13. System nach einem der vorhergehenden Ansprüche mit den Einschränkungen von Anspruch 7, in dem ein erstes Bauteil der Umlaufgetriebeanordnung mit einer der Scheibenseiten des Toroidbahngetriebes mit kontinuierlich variablem Verhältnis verbunden ist, ein zweites Bauteil mit der anderen der Scheibenseiten und mit dem Antriebsmotor verbunden ist, und die dritte Komponente über die drehmomentbegrenzende Vorrichtung mit einem festen Reaktionsglied verbunden ist.

14. System nach Anspruch 13, in dem das erste, zweite und dritte Bauteil der Umlaufgetriebeanordnung das Sonnenrad, der Planetenradträger bzw. der Kreisring sind.

15. System nach einem der vorhergehenden Ansprüche, mit einem Mittel (50), um im Falle des Anhaltens der Drehung des Getriebes mit kontinuierlich variablem Verhältnis die zweite Verbindung zwischen einem Bauteil des Getriebes mit kontinuierlich variablem Verhältnis und dem angetriebenem Mechanismus zu lösen.

16. System nach einem der vorhergehenden Ansprüche, mit einer in eine Richtung wirkenden Vorrichtung (51), die es einem Antrieb ermöglicht, in der umgekehrten Richtung durch das System zu laufen, so daß das Antriebsglied im Fall, daß das Antriebsglied nicht der üblichen Betriebsbetätigung unterworfen ist, auf die Stellung des angetriebenen Mechanismus anspricht.

17. System nach einem der vorhergehenden Ansprüche mit den Einschränkungen von Anspruch 6, in dem eine Mehrzahl von Rollen einen Antrieb über eine gemeinsame Höhlung, die den Toroideingang und die Ausgangsscheiben trennt, überträgt, in dem die zweite Verbindung kraftübertragende Verbindungsglieder (59, 61, 62) umfaßt, die den Schlitten jeder derartigen Rolle mit dem angetriebenen Mechanismus verbinden, und in dem diese Verbindungsglieder jeweils eine als Drehpunkt dienende Verbindung (64) mit einem beweglichen Kraftausgleichsglied (52) umfassen, das imstande ist, eine Gleichgewichtsstellung zu suchen, in der auf den angetriebenen Mechanismus durch alle Rollen gleiche Kräfte ausgeübt werden.

18. System nach Anspruch 17, in dem der Kraftausgleichsmechanismus nominal konzentrisch um das erste Betätigungsglied angeordnet ist, aber imstande ist, sich aus der konzentrischen Stellung herauszubewegen, um die Gleichgewichtsstellung zu erreichen.

19. System nach einem der Ansprüche 1 bis 16 mit den Einschränkungen von Anspruch 6, in dem sowohl die erste Verbindung mit dem Antriebsglied als auch die zweite Verbindung mit dem angetriebenen Mechanismus beide über die Rollenschlitten des Getriebes mit kontinuierlich variablem Verhältnis erfolgen, in dem diese Schlitten erste und zweite Teile mit einem dazwischen angeordneten Gelenk (55) umfassen, und in dem die erste und zweite Verbindung über den ersten bzw. zweiten Teil jedes Schlittens erfolgt.

20. System nach Anspruch 1, in dem der angetriebene Mechanismus die Trommel einer Motorwinde, das Führerhaus eines Drehkrans, den Revolver eines Drehbearbeitungskopfes oder jedes andere handbetriebene oder sonstwie mit niedriger Leistung betriebene Eingangsglied, dem ein konzentrisches, aber massiveres Drehausgangsglied folgt, umfaßt.

21. Automobil oder anderes Gerät mit einem Stellungs-Servosystem nach einem der vorhergehenden Ansprüche.

## Revendications

1. Système d'asservissement de position comprenant :
- un mécanisme entraîné (4),
- un premier élément d'actionnement rotatif (1, 3) grâce auquel une commande opérationnelle est normalement appliquée au mécanisme entraîné (4),
- une transmission à rapport variable en continu du type à traction-roulement à piste toroïdale disposée coaxialement avec le premier élément d'actionnement rotatif,
- un premier raccordement mécanique (34) entre l'ensemble de rouleaux de la transmission à rapport variable en continu et le premier élément d'actionnement rotatif (1, 3), et
- un deuxième raccordement (20, 37, 51, 2) entre les rouleaux de la transmission à rapport variable en continu et le mécanisme entraîné (4), et
- la transmission à rapport variable en continu comportant un élément d'entrée rotatif (28, 29, 30) séparé du premier élément d'actionnement rotatif (1, 2) et raccordé à un dispositif d'entraînement (10) pour être entraîné par celui-ci, dans lequel :
- une erreur entre les positions du mécanisme entraîné (4) et du premier élément d'actionnement (1, 2), indicative de l'application d'un effort d'entraînement substantiel, produit une sortie de puissance de la transmission à rapport variable en continu tendant à appliquer un couple au mécanisme entraîné de façon à diminuer l'erreur.

2. Système selon la revendication 1, dans lequel le mécanisme entraîné est un mécanisme de direction et le système comprend un système d'asservissement de position du type direction assistée.

3. Système selon la revendication 1 ou la revendication 2, dans lequel la sortie de la transmission à rapport variable en continu est appliquée au mécanisme entraîné à l'aide d'un deuxième élément d'actionnement rotatif (20) coaxial au premier.

4. Système selon la revendication 3, dans lequel les premier et deuxième éléments d'actionnement comprennent un arbre central et un tube d'entourage, respectivement.

5. Système selon l'une quelconque des revendications précédentes, dans lequel le mécanisme entraîné a la forme d'une crémaillère, d'une vis sans fin ou analogue, et les premier et deuxième éléments d'actionnement entraînent tous deux un engrenage, un pignon coopérant ou analogue.

6. Système selon l'une quelconque des revendications précédentes, dans lequel le variateur - à savoir le composant de variation de rapport - de la transmission à rapport variable en continu est du type à traction-roulement à piste toroïdale.

7. Système selon la revendication 6, dans lequel la transmission à rapport variable en continu comprend également un jeu d'engrenages épicycloïdaux (6).

8. Système selon la revendication 7, dans lequel le jeu d'engrenages épicycloïdaux comprend des doubles engrenages épicycloïdaux pour inverser la direction de rotation entre les engrenages de porte-pignons satellites et solaires.

9. Système selon la revendication 6, la revendication 7 ou la revendication 8, dans lequel le premier raccordement entre le premier élément d'actionnement et la transmission à rapport variable en continu à piste toroïdale se fait à l'aide des chariots à rouleaux (33), de façon à tendre à altérer l'orientation des rouleaux, et, par conséquent, le rapport de transmission, lorsque le mécanisme entraîné est actionné.

10. Système selon la revendication 9, dans lequel le deuxième raccordement entre la transmission à rapport variable en continu et le mécanisme entraîné se fait au moyen d'un élément réagissant à la réaction de couple subie par les rouleaux.

11. Système selon l'une quelconque des revendications précédentes, comprenant un dispositif (21) pour limiter le couple que la transmission à rapport variable en continu peut appliquer au mécanisme entraîné.

12. Système selon la revendication 11, dans lequel le dispositif de limitation de couple se présente sous la forme d'un frein, d'un embrayage à patinage, ou analogue.

13. Système selon l'une quelconque des revendications précédentes, lorsqu'elles comprennent les limitations de la revendication 7, dans lequel un premier composant du jeu d'engrenages épicycloïdaux est raccordé à l'un des côtés de disque d'une transmission à rapport variable en continu à piste toroïdale, un deuxième composant est fixé à l'autre des côtés de disques, ainsi qu'au moteur d'entraînement, et le troisième composant est fixé à un élément de réaction fixe au moyen du dispositif de limitation de couple.

14. Système selon la revendication 13, dans lequel les premier, deuxième et troisième composants du jeu d'engrenages épicycloïdaux sont respectivement l'engrenage solaire, le porte-pignons satellites et la couronne.

15. Système selon l'une quelconque des revendications précédentes, comprenant des moyens (50) pour invalider le deuxième raccordement entre un composant de la transmission à rapport variable en continu et le mécanisme entraîné si la transmission à rapport variable en continu s'arrêtait de tourner.

16. Système selon l'une quelconque des revendications précédentes, comprenant un dispositif unidirectionnel (51) qui permet à l'entraînement de traverser le système dans le sens inverse, de telle sorte que l'élément d'actionnement réponde à la position du mécanisme entraîné, dans le cas où l'élément d'actionnement n'est pas soumis à la commande opérationnelle habituelle.

17. Système selon l'une quelconque des revendications précédentes, lorsqu'elles comprennent les limitations de la revendication 6, dans lequel une pluralité de rouleaux transmettent une traction de part et d'autre d'une cavité commune séparant des disques d'entrée et de sortie toroïdaux, dans lequel le deuxième raccordement comprend des liaisons de transmission de force (59, 61, 62) raccordant le chariot de chacun de ces rouleaux au mécanisme entraîné, et dans lequel ces liaisons comprennent chacune un raccordement pivotant (64) avec un élément d'égalisation de force mobile (52) susceptible de rechercher une position d'équilibre dans laquelle des forces égales sont exercées sur le mécanisme entraîné par tous les rouleaux.

18. Système selon la revendication 17, dans lequel le mécanisme d'égalisation de force est disposé nominalement de façon concentrique autour du premier élément d'actionnement, mais est capable de quitter sa concentricité de façon à atteindre ladite position d'équilibre.

19. Système selon l'une quelconque des revendications 1 à 16, lorsqu'elles comprennent les limitations de la revendication 6, dans lequel le premier raccordement avec l'élément d'actionnement et le deuxième raccordement avec le mécanisme entraîné sont tous deux réalisés à l'aide des chariots à rouleaux de la transmission à rapport variable en continu, dans lequel ces chariots comprennent des première et deuxième parties avec un joint articulé (55) entre eux, et dans lequel les premier et deuxième raccordements sont réalisés à l'aide des première et deuxième parties de chaque chariot, respectivement.

20. Système selon la revendication 1, dans lequel le mécanisme entraîné comprend le tambour d'un treuil de puissance, la cabine d'une grue rotative, la tourelle d'une tête d'usinage rotative ou tout autre élément d'entrée actionné à la main ou entraîné avec une puissance faible, suivi par un élément de sortie rotatif concentrique mais plus massif.

21. Automobile ou autre dispositif comprenant un système d'asservissement de position selon l'une quelconque des revendications précédentes.
